# EUROPÄISCHE PATENTSCHRIFT

(11) **EP 3 031 539 B1**
(45) Veröffentlichungstag und Bekanntmachung des Hinweises auf die Patenterteilung: **04.12.2019**
(21) Anmeldenummer: 15198693.2
(22) Anmeldetag: 09.12.2015
(51) Int. Cl.: B08B 9/043, F16L 55/26, E03F 7/12, E03F 9/00

(54) **ABBIEGEEINRICHTUNG**
TURNING DEVICE
DISPOSITIF DE TOURNAMENT

(30) Priorität: 11.12.2014 DE 202014105987 U
(43) Veröffentlichungstag der Anmeldung: 15.06.2016
(73) Patentinhaber: iPEK International GmbH, 87477 Sulzberg (DE)
(72) Erfinder: Kennerknecht, Gerhard, 87561 Oberstdorf (DE); Becherer, Andreas, 87448 Waltenhofen (DE)
(74) Vertreter: 2s-ip Schramm Schneider Bertagnoll Patent- und Rechtsanwälte Part mbB

(56) Entgegenhaltungen:
- EP-A1- 1 450 095
- EP-A1- 1 632 706
- DE-C1- 19 815 579
- US-A1- 2011 259 460

## Beschreibung

### Gebiet der Erfindung

Die Erfindung betrifft eine Abbiegeeinrichtung, insbesondere für ein Inspektions- und/oder Reinigungssystem, vorzugsweise Kanalinspektions- und/oder Reinigungssystem, sowie ein Inspektions- und/oder Reinigungssystem, insbesondere Kanalinspektions- und/oder Reinigungssystem mit einer erfindungsgemäßen Abbiegeeinrichtung.

### Hintergrund der Erfindung und Stand der Technik

Zur Durchführung von Rohr- bzw. Kanalinspektionen oder Kanalreinigungs- bzw. Wartungsarbeiten ist es bekannt, sogenannte Kanalinspektions- und/oder Wartungssysteme zu verwenden, die in das zu inspizierende bzw. wartende Rohr bzw. Kanalrohr eingebracht werden können und im Kanalrohr bewegt, etwa verfahren oder vorgeschoben werden können. Ein Hausanschlusskanal ist in der Regel ein stark verzweigtes Rohrnetz, das in einen Hauptkanal mündet, in dem die Kanalinspektions- und/oder Wartungssysteme eingeführt werden.

Die Inspektions- bzw. Wartungssysteme müssen hierbei so ausgestaltet sein, dass diese von dem Hauptkanal aus in einen Nebenkanal abzweigen können, um auch den Nebenkanal inspizieren bzw. warten zu können.

Bekannte Inspektions- bzw. Reinigungssysteme verwenden hierzu Leit- und/oder Abdrückvorrichtungen, die über die Kontur des vorderen Endes des Inspektions- bzw. Wartungssystems hinausragen und relativ zum Inspektions- bzw. Wartungssystem geschwenkt werden können.

Ein derartiges System ist beispielsweise aus der DE 203 17 314 U1 bekannt. An dem vorderen Ende des Inspektionssystems ist hier eine Kameraeinheit angeordnet, die um eine in Vorschubrichtung verlaufende Achse drehbar ist, wobei an einem Drehmechanismus ein Lenkstäbchen befestigt ist. Beim Anfahren eines Seitenkanals wird der Drehmechanismus so gedreht, dass das Lenkstäbchen zumindest teilweise in den Seitenkanal hineinragt, sodass sich das Lenkstäbchen bei einem weiteren Vorschub des Inspektionssystems an der Seitenwand des Seitenkanals abstützt und somit ein Abbiegen des Inspektionssystems in den Seitenkanal hinein bewirkt. Aus der DE 101 02 056 A1 ist eine Satellitenkamera eines Rohrinspektionssystems bekannt, an der eine Leitvorrichtung angeordnet ist, die zur Umlenkung der Satellitenkamera vorgesehen ist, wobei die Leitvorrichtung als eine über den Außenumriss der Satellitenkamera hinaus verfahrbare Abdrückvorrichtung ausgebildet ist. Des Weiteren zeigt EP1450095 ein Gerät für Rohrinnenaufgaben, das einen Korpus auf weist, der einerseits von einem Kopfstück und andererseits von einem Endstück begrenzt wird. Zwischen dem Kopfstück und dem Endstück ist eine biegsame Seele angeordnet. Zwischen dem Kopfstück und dem Endstück sind ferner mindestens drei Zugelemente eingespannt.

Derartige Systeme haben allerdings den Nachteil, dass die über die Kamerakontur hinausragenden Leit- bzw. Lenkvorrichtung im Blickwinkel des Kamerabildes liegen können und dadurch die Inspektion negativ beeinflussen können. Zudem können diese Leitvorrichtungen die Beweglichkeit, beispielsweise eines Kamerakopfes, negativ beeinflussen.

Sofern anstelle eines Kamerakopfes ein Werkzeug, etwa ein Fräswerkzeug, vorgesehen ist, kann die Leitvorrichtung sogar verhindern, dass das Werkzeug an die zu bearbeitende Stelle gelangen kann, wenn nicht entsprechende Mittel vorgesehen sind, mit denen der Lenkstab eingefahren oder weggeklappt werden kann.

### Aufgabe der Erfindung

Der Erfindung liegt daher die Aufgabe zugrunde, die aus dem Stand der Technik bekannten Nachteile zumindest teilweise zu vermeiden und Lösungen bereitzustellen, mit denen es möglich ist, besser und einfacher in einen Nebenkanal abzubiegen ohne hierbei die Funktion der Inspektions- und/oder Wartungseinheiten negativ zu beeinflussen.

### Erfindungsgemäße Lösung

Erfindungsgemäß wird diese Aufgabe mit einer Abbiegeeinrichtung sowie mit einem Inspektions- und/oder Reinigungssystem mit einer erfindungsgemäßen Abbiegeeinrichtung nach den unabhängigen Ansprüchen gelöst. Vorteilhafte Weiterbildungen und Ausgestaltungen der Erfindung sind in den jeweiligen abhängigen Ansprüchen angegeben.

Bereitgestellt wird demnach eine Abbiegeeinrichtung, insbesondere für ein Inspektions- und/oder Reinigungssystem, vorzugsweise Kanalinspektions- und/oder Reinigungssystem, aufweisend:
- einen Träger, insbesondere zum Befestigen von Arbeitsmitteln an der Abbiegeeinrichtung,
- ein mit dem Träger zusammenwirkendes Rückstellmittel, und
- zumindest ein mit dem Träger zusammenwirkendes Stellmittel zum Auslenken des Trägers aus einer Neutralstellung entgegen einer Rückstellkraft des Rückstellmittels,
   wobei
- das Stellmittel zumindest ein Formgedächtniselement aufweist, welches in Abhängigkeit von zumindest einer Einflussgröße seine Form reversibel ändert und wobei
- die Formänderung des Formgedächtniselements das Auslenken des Trägers aus der Neutralstellung bewirkt.

Zum Abbiegen des Inspektions- und/oder Reinigungssystems in einen Nebenkanal kann damit in vorteilhafterweise das Stellmittel bzw. das Formgedächtniselement des Stellmittels aktiviert werden, sodass sich die Form des Formgedächtniselements ändert. Durch diese Änderung des Formgedächtniselements wird der Träger, d.h. das vordere Ende der Abbiegeeinrichtung aus seiner Neutralstellung ausgelenkt, sodass das vordere Ende der Abbiegevorrichtung in den Seitenkanal zeigt bzw. hineinragt und damit das Inspektions- und/oder Reinigungssystem in den Seitenkanal verfahren werden kann. Nach Einfahrt in den Seitenkanal kann das Formgedächtniselement des Stellmittels wieder deaktiviert werden, sodass der Träger aufgrund der Rückstellkraft des Rückstellmittels wieder in seine Neutralstellung zurückkehrt, in der das Formgedächtniselement seine ursprüngliche Form aufweist.

Dadurch wird insbesondere vermieden, dass Leit- und/oder Abdrückvorrichtungen nach dem Einbiegen in den Seitenkanal über die Außenkonturen des vorderen Endes des Inspektions- und/oder Reinigungssystems hinausragen und so eine Inspektion bzw. Wartung negativ beeinflussen können.

Die Abbiegeeinrichtung kann ferner eine Befestigungseinheit aufweisen, insbesondere zum Befestigen der Abbiegeeinrichtung an einem Fahrwagen und/oder an einer Schiebeeinheit, beispielsweise ein Schiebeaal, des Inspektions- und/oder Reinigungssystems.

In einer Ausgestaltung der Erfindung kann das Rückstellmittel eine Seele umfassen, die konzentrisch zur Längsachse der Abbiegeeinrichtung angeordnet ist, wobei die Seele einerseits mit dem Träger und andererseits mit der Befestigungseinheit verbunden ist.

Die Einflussgröße kann die Temperatur des Formgedächtniselements sein, wobei die für ein vorbestimmtes Auslenken des Trägers aus der Neutralstellung benötigte Temperatur dem Formgedächtniselement direkt oder indirekt beaufschlagbar ist. In Abhängigkeit der beaufschlagten Temperatur ist es damit in vorteilhafter Weise möglich, den Träger um unterschiedliche Amplituden auszulenken.

Das Formgedächtniselement kann mit einer Steuer- und/oder Regeleinrichtung gekoppelt sein, die angepasst ist, das Formgedächtniselement mit der benötigten Temperatur zu beaufschlagen. Vorteilhafterweise kann die Steuer- und/oder Regeleinrichtung angepasst sein, elektrischen Strom in das Formgedächtniselement einzuspeisen, um das Formgedächtniselement dadurch zu erwärmen und so eine Formänderung des Formgedächtniselements zu bewirken.

Das Formgedächtniselement kann ein längliches Formgedächtniselement, insbesondere Formgedächtnisdraht, umfassen, das in Abhängigkeit von der Einflussgröße seine Länge ändert, vorzugsweise verringert.

Das Stellmittel ist vorzugsweise exzentrisch zum Rückstellmittel angeordnet, wobei das Stellmittel einerseits mit dem Träger und andererseits mit der Befestigungseinheit verbunden ist. Dadurch wird bei Beaufschlagen des Formgedächtniselements mit einer vorbestimmten Temperatur die Länge des Formgedächtniselements verringert, sodass das Formgedächtniselement eine geringere Länge aufweist als das Rückstellmittel, was dazu führt, dass sich die Abbiegeeinrichtung biegt und damit den Träger aus seiner Neutralstellung auslenkt.

In einer Ausgestaltung der Erfindung kann das Formgedächtniselement des Stellmittels
- direkt oder indirekt mit dem Träger verbunden sein, und
- direkt oder indirekt mit der Befestigungseinheit verbunden sein.

Das Stellmittel kann zusätzlich zumindest ein Zugelement aufweisen, welches
- einerseits direkt oder indirekt mit dem Formgedächtniselement und
- anderseits direkt oder indirekt mit dem Träger oder mit der Befestigungseinheit verbunden ist. Damit kann das für das Formgedächtniselement benötigte Material erheblich reduziert werden, sodass eine kostengünstige Herstellung einer erfindungsgemäßen Abbiegeeinrichtung gewährleistet ist.

Die indirekte Verbindung kann einen Flaschenzug aufweisen, was den Vorteil hat, dass das Formgedächtniselement für ein Auslenken des Trägers geringere Kräfte zur Verfügung stellen muss, sodass auch kostengünstige Formgedächtniselemente zum Einsatz kommen können.

Dem Stellmittel kann zumindest eine Umlenkeinrichtung, insbesondere Umlenkrolle, zugeordnet sein, die exzentrisch zum Rückstellmittel angeordnet ist.

In einer Ausgestaltung der Erfindung kann die Abbiegeeinrichtung zumindest ein Führungsmittel aufweisen, das zwischen dem Träger und der Befestigungseinheit sowie konzentrisch zu der Seele angeordnet ist und fest mit der Seele verbunden ist, wobei das Führungsmittel zumindest ein im Wesentlichen parallel zur Längsachse der Abbiegeeinrichtung verlaufendes Durchgangsloch aufweist, durch das das Formgedächtniselement und/oder das Zugelement hindurchgeführt sind. Damit wird beim Aktivieren des Formgedächtniselements bzw. beim Deaktivieren des Formgedächtniselements gewährleistet, dass das Formgedächtniselement und/oder das Zugelement entlang einer vorbestimmten Bahn verlaufen, was ein sicheres und insbesondere gezieltes Auslenken des Trägers gewährleistet.

In einer Ausgestaltung der Erfindung kann die Seele einen Durchgangskanal aufweisen, durch den Versorgungsleitungen, insbesondere Strom- und/oder Datenleitungen und/oder ein Wasserschlauch, insbesondere Hochdruckschlauch, hindurchführbar sind. Damit können auch die für die Versorgung des an dem Träger angeordneten Arbeitsmittels benötigten Leitungen in bzw. innerhalb der Abbiegeeinrichtung angeordnet werden, sodass keinerlei Versorgungsleitungen außerhalb der Abbiegeeinrichtung verlaufen müssen.

In einer Ausgestaltung der Erfindung kann die Seele als Biegestab mit einem Durchgangskanal ausgestaltet sein.. Vorteilhaft ist es, wenn die Seele eine Rückstellkraft aufweist, um die Abbiegeeinrichtung in die Neutralstellung zu bringen, insbesondere dann, wenn das Stellmittel nicht oder nicht mehr mit einer Temperatur beaufschlagt wird. Damit ist ferner gewährleistet, dass bei einer Unterbrechung der Energieversorgung die Abbiegeeinrichtung automatisch in die Neutralstellung zurückkehrt.

In einer Ausgestaltung der Erfindung kann die Seele selbst aus einem Formgedächtnismaterial bestehen, das bei einer Temperaturbeaufschlagung seine Form ändert. In einer Ausgestaltung kann es vorgesehen sein, dass die Seele bei einer Temperaturbeaufschlagung jene Form annimmt, die die Abbiegeeinrichtung in die Neutralstellung bringt.

Vorteilhaft ist es, wenn die Abbiegeeinrichtung einen Schutzschlauch aufweist, der einerseits mit dem Träger und andererseits mit der Befestigungseinheit verbunden ist, und wobei in dem Schutzschlauch das Stellmittel und das Rückstellmittel und gegebenenfalls die weiteren Elemente der Abbiegeeinrichtung angeordnet sind. Vorteilhaft ist hierbei, wenn der Schutzschlauch luft- und/oder fluiddicht mit dem Träger und mit der Befestigungseinheit verbunden ist.

An der Befestigungseinheit kann eine Platine angeordnet sein, die die Steuer- und/oder Regeleinrichtung aufweist.

In einer besonders vorteilhaften Ausgestaltung der Erfindung kann die Abbiegeeinrichtung mindestens drei Stellmittel aufweisen, die in radialer Richtung vorzugsweise gleichmäßig um die Seele herum angeordnet sind, um ein Auslenken des Trägers aus der Neutralstellung in jede beliebige Richtung und jede beliebige Amplitude zu ermöglichen.

In einer ganz besonders vorteilhaften Ausgestaltung der Erfindung weist die Abbiegeeinrichtung genau drei Stellmittel auf, die jeweils um einen Winkel von 120° versetzt zueinander in radialer Richtung um die Seele herum angeordnet sind.

In einer Ausgestaltung der Erfindung kann das Stellmittel eine Anzahl von Kippelemente aufweisen, wobei jeweils zwei Kippelemente mittels dem Formgedächtniselement um eine Drehachse relativ zueinander bewegbar sind.

Vorteilhaft ist hierbei, wenn jeweils zwei Kippelemente mit einem Formgedächtniselement miteinander gekoppelt sind, wobei die Formänderung des Formgedächtniselements das Bewegen der beiden Kippelemente um die Drehachse und damit das Auslenken des Trägers aus der Neutralstellung bewirkt.

Alternativ oder zusätzlich können die Kippelemente Durchgangsbohrungen aufweisen, durch die das Formgedächtniselement und/oder das Zugelement hindurchgeführt sind, wobei die Formänderung des Formgedächtniselements bewirkt, dass sich jeweils zwei Kippelemente um die Drehachse relativ zueinander bewegen und damit das Auslenken des Trägers aus der Neutralstellung bewirken. Ein durch die Durchgangsbohrungen hindurchgeführtes Zugelement ist direkt oder indirekt mit dem Formgedächtniselement gekoppelt.

In einer vorteilhaften Ausgestaltung der Erfindung bildet ein Stellmittel ein Stellmittelmodul, wobei mehrere Stellmittelmodule entlang der Längsachse der Abbiegeeinrichtung hintereinander und exzentrisch zum Rückstellmittel angeordnet sind, wobei jedes Stellmittelmodul angepasst ist, den Träger um einen vorbestimmten Winkel auszulenken, wobei die Summe der einzelnen Auslenkwinkel den Gesamtauslenkwinkel des Trägers bildet.

Dadurch ist es beispielsweise möglich, die Abbiegeeinrichtung an verschiedenen Abschnitten unterschiedlich stark abzubiegen. Es wäre sogar möglich, die Abbiegeeinrichtung in einem ersten Abschnitt in eine Richtung und in einem zweiten Abschnitt in eine andere, beispielsweise entgegengesetzte, Richtung abzubiegen.

Durch die Erfindung wird ferner ein Inspektions- und/oder Reinigungssystem, insbesondere Kanalinspektion- und/oder Reinigungssystem bereitgestellt, das zumindest eine erfindungsgemäße Abbiegeeinrichtung aufweist.

Das Inspektions- und/oder Reinigungssystem kann als Schiebesystem ausgebildet sein, wobei an der Befestigungseinheit der Abbiegeeinrichtung ein Schiebeaal angeordnet ist.

In einer alternativen Ausgestaltung der Erfindung kann das Inspektions- und/oder Reinigungssystem einen Fahrwagen aufweisen, an dem die Abbiegeeinrichtung angeordnet ist.

An dem Träger der Abbiegeeinrichtung kann beispielsweise eine Kamera bzw. ein Kameramodul, ein Spülkopf, ein Greifwerkzeug, eine Fräse der dergleichen angeordnet bzw. befestigt sein, wobei diese Einrichtungen über die durch die Seele der Abbiegeeinrichtung hindurchgeführten Versorgungsleitungen mit Energie, Wasser usw. versorgt werden.

Die erfindungsgemäße Abbiegeeinrichtung bzw. das erfindungsgemäße Inspektions- und/oder Reinigungssystem ist nicht nur für den Einsatz in Kanal- bzw. Rohrsystemen geeignet. Sie können auch zur Inspektion und/oder Wartung von unzugänglichen Bereichen, etwa in Industrieanlagen, verwendet werden. Ferner kann die erfindungsgemäße Abbiegeeinrichtung nicht nur in Inspektions- und/oder Reinigungssystemen verwendet werden, sondern überall dort, wo Einrichtungen oder Vorrichtungen umgelenkt werden müssen, um eine Richtungsänderung zu ermöglichen.

### Kurzbeschreibung der Figuren

Weitere Einzelheiten und Merkmale der Erfindung sowie konkrete, insbesondere vorteilhafte Ausführungsbeispiele der Erfindung ergeben sich aus der nachfolgenden Beschreibung in Verbindung mit der Zeichnung. Es zeigt:
- Fig. 1: eine erfindungsgemäße Ausgestaltung einer Abbiegeeinrichtung mit einem Stellmittel;
- Fig. 2: ein Beispiel einer erfindungsgemäßen Abbiegeeinrichtung mit einem alternativ ausgestalteten Stellmittel;
- Fig. 3: ein weiteres Beispiel einer erfindungsgemäßen Abbiegeeinrichtung mit einer weiteren alternativen Ausgestaltung eines Stellmittels;
- Fig. 4: eine weitere alternative Ausgestaltung eines Stellmittels einer erfindungsgemäßen Abbiegeeinrichtung;
- Fig. 5: eine noch weitere alternative Ausgestaltung eines Stellmittels einer erfindungsgemäßen Abbiegeeinrichtung;
- Fig. 6: ein Beispiel einer erfindungsgemäßen Abbiegeeinrichtung mit zwei Stellmittel;
- Fig. 7: ein konkretes Beispiel einer erfindungsgemäßen Abbiegeeinrichtung in einer perspektivischen Ansicht, wobei die Abbiegeeinrichtung mindestens zwei Stellmittel aufweist; und
- Fig. 8: einen Schiebeaal mit einer daran angeordneten Abbiegeeinrichtung.

### Detaillierte Beschreibung der Erfindung

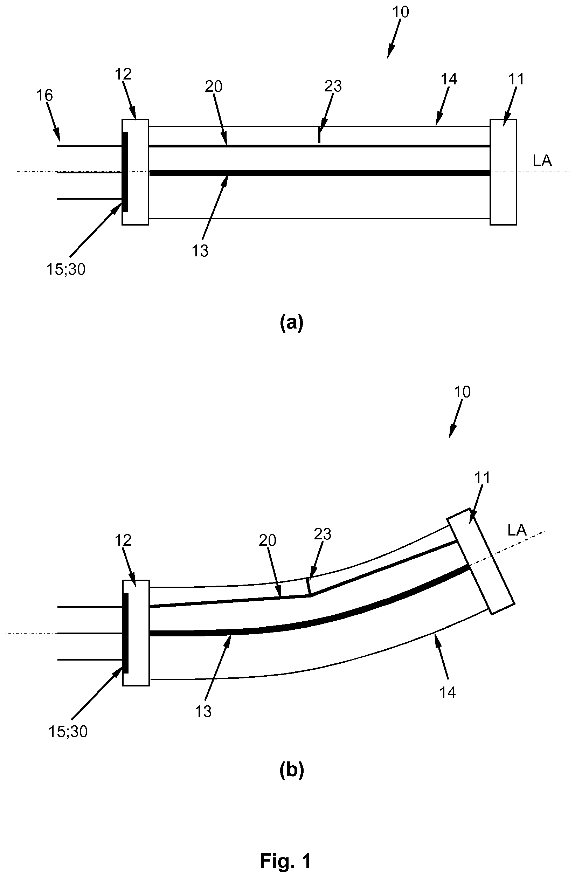

**Fig. 1** zeigt eine nicht maßstabsgetreue Prinzipskizze einer erfindungsgemäßen Abbiegeeinrichtung 10.

Die Abbiegeeinrichtung 10 weist hier im Wesentlichen einen Träger 11, eine Befestigungseinheit 12, ein Rückstellmittel 13, ein Stellmittel 20 und einen Schutzschlauch 14 auf.

An dem Träger 11 können Arbeitsmittel, beispielsweise eine Inspektionskamera bzw. ein Kameramodul, Greifwerkzeuge, Spüldüsen bzw. ein Spülkopf, Fräsmittel oder dergleichen angeordnet bzw. befestigt werden. An der Befestigungseinheit 12 kann beispielsweise ein hier nicht gezeigter Schiebeaal eines Kanalinspektionssystems angeschlossen bzw. befestigt werden. Vorteilhafterweise ist in der Befestigungseinheit die Ansteuerplatine 15 angeordnet, auf der die für das Steuern bzw. Regeln der Auslenkung benötigten Steuer- und/oder Regeleinrichtungen 30 angeordnet sind. Der Platine 15 bzw. der Befestigungseinheit 12 können Steuer-/Datenkabel und/oder Wasserleitungen, etwa ein Hochdruckspülschlauch zugeführt werden. Die Kabel bzw. Leitungen 16 können über einen entsprechenden Kanal durch die Abbiegeeinrichtung 10 hindurch bis zum Träger geführt sein, um beispielsweise eine an dem Träger angeordnete Kameraeinheit mit Energie zu versorgen oder eine an dem Träger 11 angeordnete Spüldüse mit Spülwasser zu versorgen.

Bei der in Fig. 1 gezeigten Abbiegeeinrichtung 10 ist das Rückstellmittel als Biegestab 13 ausgestaltet, der eine gewisse Rückstellkraft aufweist. Nach Auslenken des Trägers 11 aus seiner Neutralstellung bewirkt die Rückstellkraft des Biegestabes 13, dass der Träger 11 weder in seine Neutralstellung gebracht wird. Anstelle des Biegestabes 13 kann die Abbiegeeinrichtung 10 auch eine Seele aufweisen, die einen Durchgangskanal aufweist, durch den die Leitungen bzw. Schläuche 16 hindurchgeführt werden können. Die Seele 13 kann ebenfalls eine Rückstellkraft zum Zurückholen des Trägers in seine Neutralstellung aufweisen.

Das Stellmittel 20 ist vorgesehen, um den Träger aus einer Neutralstellung entgegen der Rückstellkraft des Rückstellmittels 13 auszulenken. In Abbildung (a) ist die Abbiegeeinrichtung 10 gezeigt, bei der sich der Träger in einer Neutralstellung befindet. In der Abbildung (b) ist die Abbiegeeinrichtung gezeigt, bei der der Träger 11 aus seiner Neutralstellung ausgelenkt ist, indem die Abbiegeeinrichtung gebogen wurde.

Zum Auslenken des Trägers 11 aus seiner Neutralstellung wird das Stellmittel 20 verkürzt, sodass die Abbiegeeinrichtung 10 entgegen der Rückstellkraft des Rückstellmittels 13 nach oben, d.h. in Richtung des Stellmittels gebogen wird.

Bei der in Fig. 1 gezeigten Ausgestaltung einer erfindungsgemäßen Abbiegeeinrichtung 10 weist das Stellmittel ein Formgedächtniselement 20 auf, das hier als länglicher Formgedächtnisdraht ausgebildet ist. Das Formgedächtniselement 20 ist einerseits mit der Befestigungseinheit 12 und andererseits mit dem Träger 11 verbunden, wobei das Formgedächtniselement 20 exzentrisch zum Rückstellmittel 13, d.h. radial außerhalb des Rückstellmittels 13 verläuft bzw. angeordnet ist. Das Formgedächtniselement 20 ist mit der Steuer- und/oder Regeleinrichtung 30 gekoppelt, sodass die Steuer- und/oder Regeleinrichtung das Formgedächtniselement 20 mit einer physikalischen Größe beaufschlagen kann, die eine Formänderung des Formgedächtniselements 20 bewirkt. Die Formänderung des Formgedächtniselements 20 ist vorzugsweise dergestalt, dass sich bei Beaufschlagung des Formgedächtniselements 20 mit der physikalischen Größe die Länge des Formgedächtniselements reduziert. Aufgrund der reduzierten Länge des Formgedächtniselements 20 wird der Träger 11 nach oben hin ausgelenkt.

Bei der hier gezeigten Ausgestaltung einer erfindungsgemäßen Abbiegeeinrichtung werden für das Formgedächtniselement 20 solche Materialien verwendet, die bei einer Temperaturveränderung, beispielsweise bei einer Temperaturerhöhung, ihre Form bzw. Länge verändern. Die Verwendung von Formgedächtniselementen als Stellmittel hat einerseits den Vorteil, dass dadurch sehr hohe Stellkräfte bei sehr geringem Materialeinsatz erreicht werden können. Damit kann ein besonders platzsparendes Stellmittel zur Verfügung gestellt werden, was wiederum die Herstellung von sehr kompakten und platzsparenden Abbiegeeinrichtungen ermöglicht.

Als vorteilhaft hat sich herausgestellt, wenn für das Formgedächtniselement 20 Formgedächtnislegierungen oder Formgedächtnispolymere verwendet werden, die den sogenannten Zwei-Weg-Effekt aufweisen, d.h. beim Abkühlen wieder ihre ursprüngliche Form einnehmen. Vorteilhafte Formgedächtnislegierungen sind beispielsweise Nickel-Titan, Nickel-Titan-Kupfer, Kupfer-Zink, Kupfer-Zink-Aluminium, Kupfer-Aluminium-Nickel, Eisen-Nickel-Aluminium, Eisen-Mangan, Silizium oder Zink-Gold-Kupfer.

Die zum Auslenken der Abbiegeeinrichtung erforderliche Erwärmung des Formgedächtniselements 20 kann beispielsweise über Widerstandselemente, über induktive Erwärmung oder dergleichen bewirkt werden. In einer einfachen Form wird das Formgedächtniselement 20 mit einem elektrischen Strom beaufschlagt, der eine entsprechende Erwärmung des Formgedächtniselements bewirkt.

Der Schutzschlauch 14 ist sowohl mit dem Träger 11 als auch mit der Befestigungseinheit 12 verbunden, wobei diese Verbindung vorzugsweise luft- und/oder fluiddicht ausgebildet ist. Im Inneren des Schutzschlauches 14 sind das Rückstellmittel 13 und das Formgedächtniselement 20 angeordnet, wobei auch das Rückstellmittel 13 fest mit dem Träger 11 und der Befestigungseinheit 12 verbunden ist. Als Materialien für den Schutzschlauch eignen sich insbesondere bruchfeste, abriebfeste und dennoch flexible Materialien.

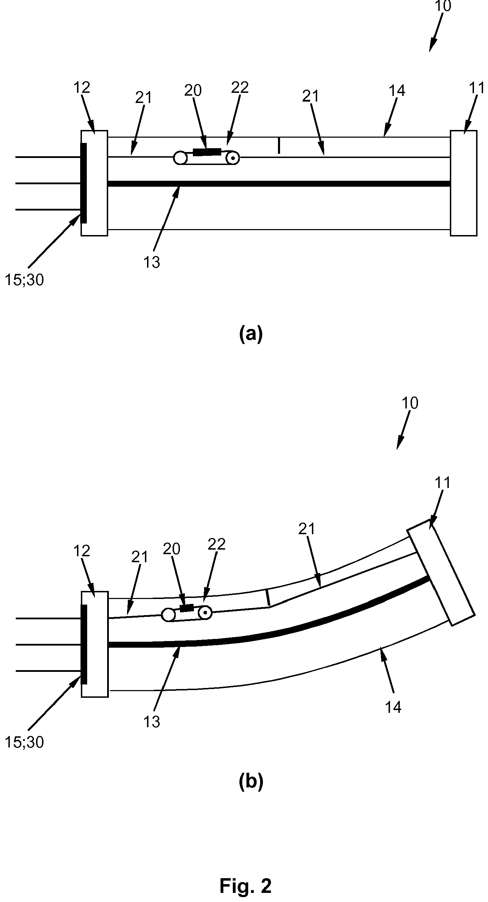

**Fig. 2** zeigt eine alternative Ausgestaltung einer erfindungsgemäßen Abbiegeeinrichtung 10.

Der Grundaufbau der in Fig. 2 gezeigten Abbiegeeinrichtung 10 entspricht im Wesentlichen dem in Fig. 1 gezeigten Aufbau. Der Unterschied besteht lediglich in der Ausgestaltung des Stellmittels, mit dem das Auslenken des Trägers aus der Neutralstellung 11 bewirkt wird.

Das Stellmittel weist hier ein Formgedächtniselement 20, ein Zugelement 21 sowie einen Flaschenzug 22 auf. Der Flaschenzug 22 ist einerseits über ein Zugelement 21 mit der Befestigungseinheit 12 verbunden. Andererseits ist der Flaschenzug 22 über ein weiteres Zugelement 21 mit dem Träger 11 verbunden. Als Zugelemente können beispielsweise Drähte, Seile oder dergleichen verwendet werden. Um eine große Anzahl von Auslenkzyklen mit gleichbleibender Auslenkamplitude zu ermöglichen, ist es vorteilhaft, wenn die Zugelemente 21 bei Einwirkung einer Zugkraft ihre Länge nicht verändern.

In dem Flaschenzug 22 ist das Formgedächtniselement 20 angeordnet, dessen Länge sich bei Erwärmung reduziert, sodass der Abstand zwischen den beiden Rollen des Flaschenzuges 22 ebenfalls reduziert und damit ein Verbiegen der Abbiegeeinrichtung 10 bewirkt, wie in Abbildung (b) der Fig. 2 gezeigt.

Die Verwendung eines Flaschenzuges 22 als Bestandteil des Stellmittels hat den Vorteil, dass die von dem Formgedächtniselement 20 zur Verfügung zu stellenden Stellkräfte niedrig gehalten werden.

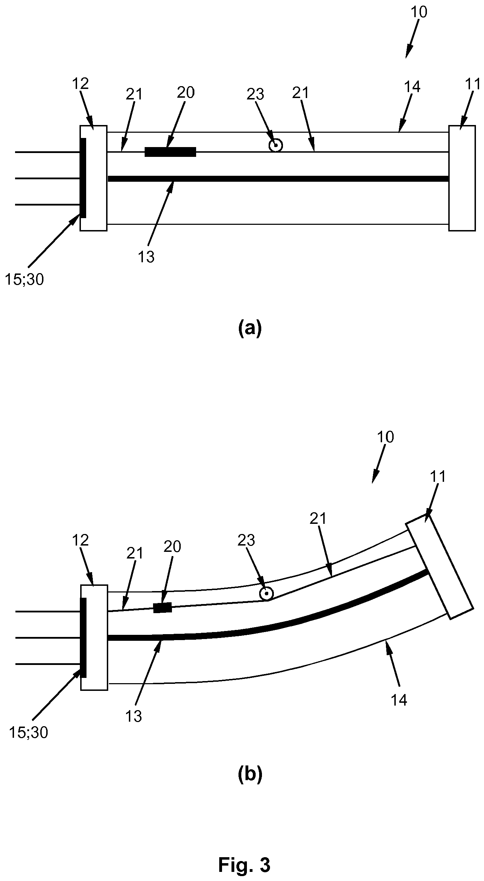

**Fig. 3** zeigt eine weitere Ausgestaltung einer erfindungsgemäßen Abbiegeeinrichtung 10. Auch die in Fig. 3 gezeigte Abbiegeeinrichtung weist im Wesentlichen die gleiche Grundform auf, wie die in Fig. 1 gezeigte Abbiegeeinrichtung 10. Der Unterschied besteht im Wesentlichen darin, dass das Stellmittel ein Zugelement 21, ein Formgedächtniselement 20 und eine Umlenkeinrichtung, beispielsweise eine Umlenkrolle 23, aufweist. Das Formgedächtniselement 20 ist hier einerseits über ein Zugelement 21 mit der Befestigungseinheit 12 und andererseits über ein weiteres Zugelement 21 mit dem Träger 11 verbunden. Das Formgedächtniselement 20 kann aber auch an einer Seite direkt mit dem Träger oder an der anderen Seite direkt mit der Befestigungseinheit verbunden sein.

In Abbildung (a) ist die Abbiegeeinrichtung in einer Neutralstellung gezeigt. Durch Erwärmung des Formgedächtniselementes 20 wird dessen Länge verkürzt, sodass die Abbiegeeinrichtung 10 in Richtung des Stellmittels verbogen wird, wobei das Zugelement 21, das ein Draht, ein Seil oder ähnliches sein kann, um die Rolle 23 umgelenkt wird.

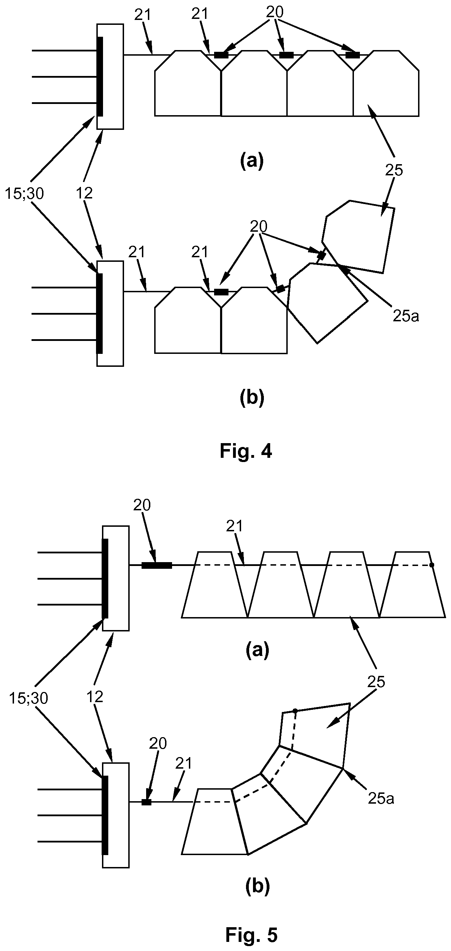

**Fig. 4** zeigt eine alternative Ausgestaltung eines Stellmittels einer erfindungsgemäßen Abbiegeeinrichtung, wobei in Abbildung (a) das Stellmittel in einer Neutralstellung und in Abbildung (b) das Stellmittel in einer ausgelenkten Stellung gezeigt sind.

Das Stellmittel weist hier eine Anzahl von Kippelementen 25 auf, wobei jeweils zwei benachbarte Kippelemente um eine Drehachse 25a relativ zueinander bewegbar sind, d.h. um die Drehachse 25a drehbar sind, sodass sich die Kippelemente 25 an einer Seite der Drehachse aufeinander zubewegen.

Zwischen jeweils zwei Kippelementen 25 ist ein Formgedächtniselement 20 angeordnet, das bei Erwärmung seine Länge reduziert, sodass die beiden mit dem Formgedächtniselement 20 gekoppelten Kippelemente 25 um die Drehachse 25a herum aufeinander zubewegt werden. Die Formgedächtniselemente 20 können entweder beidseitig direkt mit den jeweiligen Kippelementen verbunden sein, oder, wie in Fig. 4 gezeigt, jeweils über ein Zugelement 21 mit den jeweiligen Kippelementen 25 gekoppelt sein. Vorteilhaft ist hierbei, dass die Formgedächtniselemente 20 unabhängig voneinander und unterschiedlich stark erhitzt werden können, sodass zwischen jeweils zwei Kippelemente unterschiedliche Auslenkwinkel eingestellt werden können. Das erste Kippelement ist vorzugsweise fest an der Befestigungseinheit 12 angeordnet, oder wie in Fig. 4 gezeigt, über ein Zugelement 21 mit der Befestigungseinheit 12 verbunden. Jedes der einzelnen Formgedächtniselemente 20 ist ferner mit der Steuer- und/oder Regeleinrichtung 30 gekoppelt.

Die in Fig. 4 gezeigte Stelleinrichtung kann ebenfalls innerhalb des Schutzschlauches 40 der Abbiegeeinrichtung 10 angeordnet werden, wobei das letzte bzw. rechte Kippelement 25 fest mit dem Träger entweder direkt oder beispielsweise über ein weiteres stabiles vorzugsweise nicht biegbares Element indirekt verbunden ist.

Das in Fig. 4 gezeigte Stellmittel kann ein Stellmittelmodul sein, wobei mehrere solche Stellmittelmodule entlang der Längsachse der Abbiegeeinrichtung hintereinander angeordnet werden können. Damit wird erreicht, dass verschiedene Abschnitte der Abbiegeeinrichtung 10 unabhängig voneinander gebogen werden können.

Ferner kann ein solches Stellmittelmodul mit den in Fig. 1 bis Fig. 3 gezeigten Stellmitteln kombiniert werden.

**Fig. 5** zeigt eine alternative Ausgestaltung eines Stellmittels einer erfindungsgemäßen Abbiegeeinrichtung, wobei in Abbildung (a) das Stellmittel in einer Neutralstellung und in Abbildung (b) das Stellmittel in einer ausgelenkten Stellung gezeigt ist.

Das Stellmittel weist hier ebenfalls eine Anzahl von Kippelementen 25 auf, wobei jeweils zwei Kippelemente um eine Drehachse 25a relativ zueinander bewegbar sind, wie mit Bezug auf Fig. 4 erläutert.

Die Kippelemente 25 weisen Durchgangsbohrungen auf, die vorzugsweise parallel zur Längsachse der Abbiegeeinrichtung 10 verlaufen. Durch die Bohrungen ist ein Zugelement 21 hindurchgeführt, das an dem einen Ende mit dem letzten Kippelement 25 und an dem anderen Ende über ein Formgedächtniselement 20 mit der Befestigungseinheit 12 verbunden ist. Ein Erwärmen des Formgedächtniselements 20 bewirkt, dass sich die Gesamtlänge von Formgedächtniselement und Zugelement reduziert, sodass die Kippelemente 25 aneinander kippen und damit ein Auslenken der Abbiegeeinrichtung bewirken. Auch hierbei ist es vorteilhaft, wenn das erste, d.h. linke Kippelement 25 fest mit der Befestigungseinheit verbunden ist oder stationär relativ zur Befestigungseinheit 12 angeordnet ist, sodass dieses Kippelement nicht bewegt bzw. gekippt werden kann.

An dem letzten, d.h. rechten Kippelement 25 kann der Träger 11 der Abbiegeeinrichtung angeordnet sein.

Auch das in Fig. 5 gezeigte Stellmittel kann ein Stellmittelmodul bilden, sodass mehrere solcher Stellmittelmodule entlang der Längsachse der Abbiegeeinrichtung hintereinander angeordnet werden können, um beispielsweise Abschnitte der Abbiegeeinrichtung zu definieren, die unabhängig voneinander und unterschiedlich stark ausgelenkt bzw. gebogen werden können.

In Fig. 4 und Fig. 5 sind jeweils Stellmittel gezeigt, die vier Kippelemente 25 aufweisen. Erfindungsgemäß können auch zwei, drei oder mehr als vier Kippelemente vorgesehen sein.

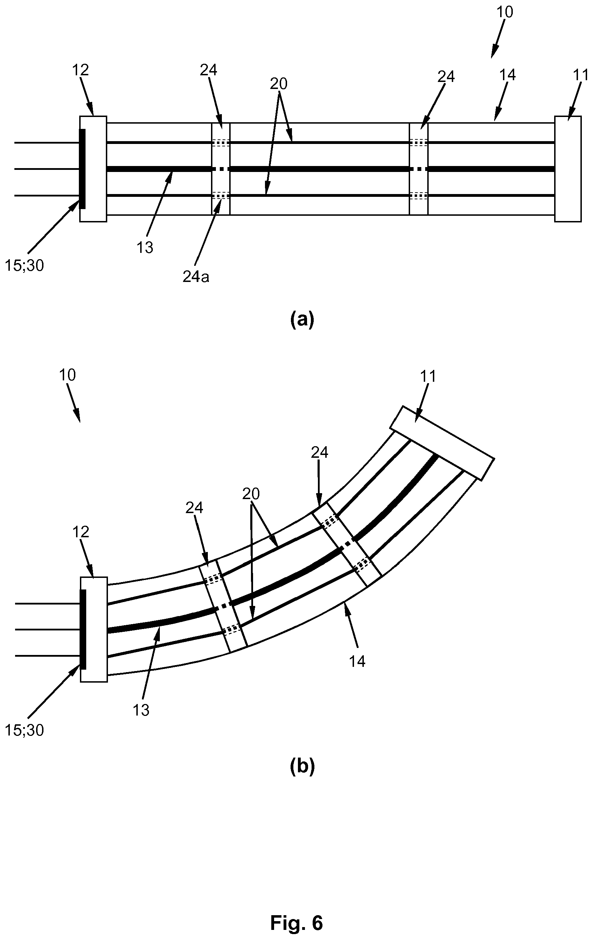

**Fig. 6** zeigt eine weitere Ausgestaltung einer erfindungsgemäßen Abbiegeeinrichtung 10.

Der Aufbau entspricht im Wesentlichen der in Fig. 1 gezeigten Abbiegeeinrichtung. Im Unterschied zu der in Fig. 1 gezeigten Abbiegeeinrichtung weist die in Fig. 6 gezeigte Abbiegeeinrichtung 10 zwei Formgedächtniselemente bzw. Formgedächtnisdrähte 20 auf, die jeweils mit dem Träger 11 und der Befestigungseinheit 12 verbunden sind und in radialer Richtung außerhalb des Rückstellmittels bzw. des Biegestabes 13 angeordnet sind. Durch Vorsehen von zwei Formgedächtniselementen 20 kann die Abbiegeeinrichtung in zwei Richtungen gebogen bzw. ausgelenkt werden, nämlich in Richtung des ersten Formgedächtniselementes und in Richtung des zweiten Formgedächtniselementes. Werden beide Formgedächtniselemente gleichzeitig erhitzt, sodass sich die beiden Formgedächtniselemente gleich stark oder unterschiedlich stark verkürzen, kann die Abbiegeeinrichtung 10 auch in eine Richtung ausgelenkt bzw. gebogen werden, die zwischen den beiden Formgedächtniselementen liegt.

In Abbildung (a) ist die Abbiegeeinrichtung 10 in einer nicht ausgelenkten Stellung und in Abbildung (b) in einer ausgelenkten Stellung gezeigt.

Bei Vorsehen von drei Formgedächtniselementen bzw. Formgedächtnisdrähten 20 (oder bei Vorsehen von drei Stellmitteln, wie mit Bezug auf Fig. 2 bis Fig. 5 gezeigt), die in radialer Richtung gleichmäßig um den Biegestab bzw. um die Seele 13 herum angeordnet sind, kann die Abbiegeeinrichtung 10 im Umkreis von 360° in jede beliebige Richtung und um jede beliebige Amplitude ausgelenkt werden, wobei die gewünschte Auslenkrichtung und Auslenkamplitude durch eine entsprechende Erwärmung der jeweiligen Formgedächtniselemente 20 erreicht wird. Es können auch mehr als drei Stellmittel vorgesehen sein, um ein Auslenken bzw. Abbiegen der Abbiegeeinrichtung 10 in jede beliebige Richtung zu ermöglichen.

Bei der in Fig. 6 gezeigten erfindungsgemäßen Abbiegeeinrichtung 10 weist diese eine Anzahl (hier zwei) von Führungsmitteln 24 auf, die als Führungsscheiben ausgebildet sein können und die für jedes Formgedächtniselement eine Bohrung aufweisen, die im Wesentlichen parallel zur Längsachse der Abbiegeeinrichtung 10 verlaufen. Durch die Bohrungen 24a werden die Formgedächtniselemente bzw. die Formgedächtnisdrähte 20 hindurchgeführt. Ferner sind die Führungsmittel 24 vorzugsweise fest mit der Seele bzw. mit dem Biegestab 13 verbunden. Dadurch wird erreicht, dass die Formgedächtniselemente 20 beim Erhitzen und beim Abkühlen sowie bei einer Neutralstellung der Abbiegeeinrichtung immer auf einer vorgegebenen Bahn verlaufen.

In einer alternativen, in Fig. 6 nicht gezeigten Ausgestaltung, kann auf die Durchgangslöcher 24a der Führungsmittel 24 verzichtet werden, wobei die zwischen zwei Führungsmitteln 24 bzw. die zwischen einem Führungsmittel 24 und der Befestigungseinheit 12 bzw. die zwischen einem Führungsmittel 24 und dem Träger 11 verlaufenden Formgedächtniselemente bzw. Formgedächtnisdrähte 20 fest mit den jeweiligen Führungsmitteln 24 bzw. Träger 11 bzw. Befestigungseinheit 12 verbunden sind. Bei dem in Fig. 6 gezeigten Beispiel einer erfindungsgemäßen Abbiegeeinrichtung 10 würde diese demnach sechs einzelne Formgedächtniselemente bzw. Formgedächtnisdrähte 20 aufweisen, die vorzugsweise unabhängig voneinander und unterschiedlich stark erwärmt werden können. Damit wird es in vorteilhafter Weise möglich, dass beispielsweise der erste, der Befestigungseinheit 12 zugeordnete Abschnitt der Abbiegeeinrichtung 10 nach oben gebogen wird, während der zweite, zwischen den beiden Führungsmitteln 24 verlaufende Abschnitt nach unten gebogen wird. Bei Vorsehen von neun Formgedächtniselementen 20, die in radialer Richtung gleichmäßig um die Seele bzw. Biegestab 13 herum angeordnet sind, könnten die drei Abschnitte der Abbiegeeinrichtung unabhängig voneinander in jede beliebige Richtung und unterschiedlich stark gebogen werden.

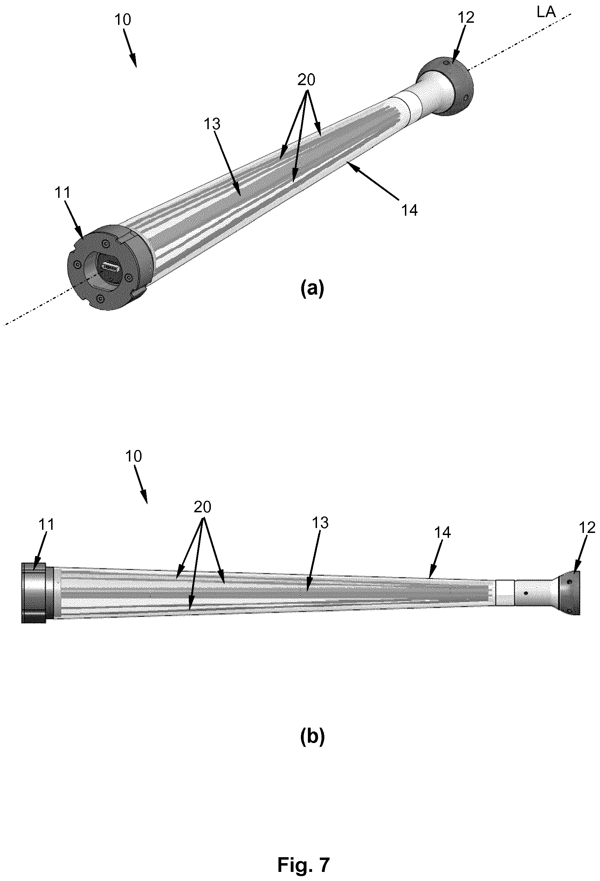

**Fig. 7** zeigt ein konkretes Beispiel einer erfindungsgemäßen Abbiegeeinrichtung, wobei in Abbildung (a) die Abbiegeeinrichtung 10 in einer perspektivischen Ansicht und in Abbildung (b) in einer Seitenansicht gezeigt ist. An dem vorderen Ende ist ein Träger 11 vorgesehen, an dem beispielsweise über eine elektrische Steckverbindung eine Kameraeinheit bzw. ein Kameramodul aufgesteckt werden kann. An dem hinteren Ende weist die Abbiegeeinrichtung 10 eine Befestigungseinheit 12 auf, an der beispielsweise ein Schiebeaal eines Kanalinspektionssystems angeschlossen bzw. befestigt werden kann.

Im Inneren des Schutzschlauches 14 ist die Seele bzw. der Biegestab 13 und um den Biegestab herum sind eine Anzahl von Formgedächtniselementen 20 angeordnet, die ein Auslenken der Abbiegeeinrichtung 10 in jede beliebige Richtung ermöglichen. Die Seele bzw. der Biegestab 13 weist einen durchgängigen Kanal auf, durch den Strom- und/oder Datenleitungen geführt werden können, um einerseits die an dem Träger angeordnete Kamera mit Energie zu versorgen und andererseits Steuerbefehle an die Kamera zu übertragen und/oder Bilddaten von der Kamera an eine Kontrolleinrichtung zu übertragen. In der Befestigungseinheit 12 ist eine Platine mit der Steuer- und/oder Regeleinrichtung angeordnet, wobei die Befestigungseinheit 12 entsprechende Anschlussmittel bzw. Anschlusskontakte aufweist, um beispielsweise Steuerbefehle an die Steuer- und/oder Regeleinrichtung zu übertragen. Die Steuer- und/oder Regeleinrichtung ist wiederum mit den Formgedächtniselementen 20 gekoppelt, um diese für ein Auslenken der Abbiegeeinrichtung 10 entsprechend anzusteuern, d.h. entsprechend zu erwärmen.

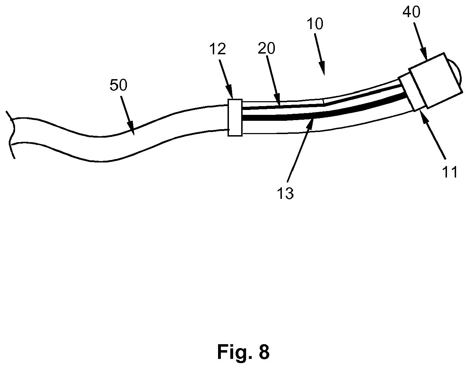

**Fig. 8** zeigt eine bespielhafte Verwendung einer erfindungsgemäßen Abbiegeeinrichtung 10.

Die Abbiegeeinrichtung 10 ist hier an einem vorderen Ende eines Schiebeaals 50 eines Kanalinspektionssystems angeordnet und vorzugsweise lösbar mit dem Schiebeaal 50 gekoppelt. In dem Schiebeaal 50 können Versorgungsleitungen angeordnet werden, um die Abbiegeeinrichtung 10 mit elektrischen Strom und Daten zu versorgen, die nötig sind, um die Abbiegeeinrichtung um einen gewissen Winkel aus der Neutralstellung auszulenken.

An dem vorderen Ende der Abbiegeeinrichtung 10 ist ein Arbeitsmittel 40 befestigt, das hier eine Inspektionskamera ist. Durch Beaufschlagung des Formgedächtniselements 20 mit einem elektrischen Strom wird das Formgedächtniselement aufgrund seines ohmschen Widerstandes erwärmt, was zu einer Verkürzung des Formgedächtniselements führt. Die Verkürzung des Formgedächtniselements wiederum führt dazu, dass das vordere Ende der Abbiegeeinrichtung 10 ausgelenkt wird. Im ausgelenkten Zustand kann das vordere Ende der Abbiegeeinrichtung 10 beispielsweise in einen Seitenkanal eines Abwasserkanals hineinragen, sodass ein weiterer Vorschub mit Hilfe des Schiebeaals ein Einschieben der Kamera 40 in den Seitenkanal bewirkt. Nachdem die Kamera vollständig in den Seitenkanal eingeschoben wurde kann das Beaufschlagen des Formgedächtniselements 20 mit elektrischen Strom beendet werden, sodass sich das Formgedächtniselement wieder ausdehnt. Die Rückstellkraft der Seele 13 bewirkt dann, dass die Abbiegeeinrichtung 10 in ihre Neutralstellung, wie in Fig. 1 (a) gezeigt, zurückkehrt.

Die erfindungsgemäßen Abbiegeeinrichtung 10 kann aber auch an oder auf einem Inspektionswagen angeordnet oder befestigt werden um beispielsweise Arbeitsmittel, etwa Greifeinrichtungen, Fräsen oder dergleichen, relativ zum Fahrwagen auszulenken.

### Bezugszeichen:

- 10: Abbiegeeinrichtung
- 11: Träger zum Befestigen von Arbeitsmitteln
- 12: Befestigungseinheit
- 13: Rückstellmittel, insbesondere Seele oder Biegestab
- 14: Schutzschlauch
- 15: Platine der Steuer- und/oder Regeleinrichtung
- 16: Steuer-/Datenkabel und/oder Wasserzuleitung (Schlauch bzw. Hochdruckschlauch)
- 20: Formgedächtniselement
- 21: Zugelement (z.B. Draht, Seil)
- 22: Flaschenzug
- 23: Umlenkeinrichtung (z.B. Umlenkrolle)
- 24: Führungsmittel (z.B. Führungsscheibe)
- 24a: Durchgangsloch im Führungsmittel
- 25: Kippelemente
- 25a: Drehachse
- 30: Steuer- und/oder Regeleinrichtung
- 40: Arbeitsmittel (z.B. Kamera, Manipulator, etc.)
- 50: Schiebeaal
- LA: Längsachse

## Patentansprüche

1. Abbiegeeinrichtung (10), insbesondere für ein Inspektions- und/oder Reinigungssystem, vorzugsweise Kanalinspektions- und/oder Reinigungssystem, aufweisend:
- einen Träger (11), insbesondere zum Befestigen von Arbeitsmitteln an der Abbiegeeinrichtung (10),
- eine Befestigungseinheit (12), insbesondere zum Befestigen der Abbiegeeinrichtung (10) an einem Fahrwagen und/oder an einer Schiebeeinheit des Kanalinspektions- und/oder Reinigungssystems,
- ein mit dem Träger (11) zusammenwirkendes Rückstellmittel (13), und
- zumindest ein mit dem Träger (11) zusammenwirkendes Stellmittel zum Auslenken des Trägers (11) aus einer Neutralstellung entgegen einer Rückstellkraft des Rückstellmittels (13),
wobei
- das Stellmittel zumindest ein Formgedächtniselement (20) aufweist, welches in Abhängigkeit von zumindest einer Einflussgröße seine Form reversibel ändert,
- die Formänderung des Formgedächtniselements (20) das Auslenken des Trägers (11) aus der Neutralstellung bewirkt,
- das Rückstellmittel (13) eine Seele (13) umfasst, die konzentrisch zur Längsachse (LA) der Abbiegeeinrichtung (10) angeordnet ist, wobei die Seele einerseits mit dem Träger (11) und andererseits mit der Befestigungseinheit (12) verbunden ist, und
- die Seele (13) einen Durchgangskanal aufweist, durch den Versorgungsleitungen, insbesondere Strom- und/oder Datenleitungen und/oder Wasserschlauch, hindurchführbar sind.

2. Abbiegeeinrichtung nach dem vorhergehenden Anspruch, wobei die Einflussgröße die Temperatur des Formgedächtniselements (20) ist und wobei die für ein vorbestimmtes Auslenken des Trägers (11) aus der Neutralstellung benötigte Temperatur dem Formgedächtniselement (20) direkt oder indirekt beaufschlagbar ist, wobei das Formgedächtniselement (20) mit einer Steuer- und/oder Regeleinrichtung (30) gekoppelt ist, die angepasst ist, das Formgedächtniselement (20) mit der benötigten Temperatur zu beaufschlagen und wobei die Steuer- und/oder Regeleinrichtung (30) vorzugsweise angepasst ist, elektrischen Strom in das Formgedächtniselement (20) einzuspeisen, um es dadurch zu erwärmen.

3. Abbiegeeinrichtung nach einem der vorhergehenden Ansprüche, wobei das Formgedächtniselement (20) ein längliches Formgedächtniselement, insbesondere Formgedächtnisdraht, umfasst, das in Abhängigkeit von der Einflussgröße seine Länge ändert, vorzugsweise verringert.

4. Abbiegeeinrichtung nach einem der vorhergehenden Ansprüche, wobei das Stellmittel exzentrisch zum Rückstellmittel (13) angeordnet ist und wobei das Stellmittel einerseits mit dem Träger (11) und andererseits mit der Befestigungseinheit (12) verbunden ist, wobei das Formgedächtniselement (20) des Stellmittels
- direkt oder indirekt mit dem Träger (11) verbunden ist, und
- direkt oder indirekt mit der Befestigungseinheit (12) verbunden ist.

5. Abbiegeeinrichtung nach Anspruch 4, wobei das Stellmittel zusätzlich zumindest ein Zugelement (21) aufweist, welches
- einerseits direkt oder indirekt mit dem Formgedächtniselement (20) und
- andererseits direkt oder indirekt mit dem Träger (11) oder mit der Befestigungseinheit (12) verbunden ist.

6. Abbiegeeinrichtung nach einem der vorhergehenden Ansprüche, wobei dem Stellmittel zumindest eine Umlenkeinrichtung (23), insbesondere Umlenkrolle, zugeordnet ist, die exzentrisch zum Rückstellmittel (13) angeordnet ist.

7. Abbiegeeinrichtung nach einem der vorhergehenden Ansprüche, wobei diese zumindest ein Führungsmittel (24) aufweist, das zwischen dem Träger (11) und der Befestigungseinheit (12) sowie konzentrisch an der Seele (13) angeordnet ist und fest mit der Seele (13) verbunden ist, wobei das Führungsmittel (24) zumindest ein im Wesentlichen parallel zur Längsachse (LA) der Abbiegeeinrichtung verlaufendes Durchgangsloch (24a) aufweist, durch das das Formgedächtniselement (20) und/oder das Zugelement (21) hindurchgeführt ist.

8. Abbiegeeinrichtung nach einem der vorhergehenden Ansprüche, wobei die Seele (13) als Biegestab mit einem Durchgangskanal ausgestaltet ist.

9. Abbiegeeinrichtung nach einem der vorhergehenden Ansprüche, wobei diese einen Schutzschlauch (14) aufweist, der einerseits mit dem Träger (11) und andererseits mit der Befestigungseinheit (12) luft- und/oder fluiddicht verbunden ist und in dem das Stellmittel und das Rückstellmittel (13) angeordnet sind.

10. Abbiegeeinrichtung nach einem der vorhergehenden Ansprüche, wobei diese mindestens drei Stellmittel aufweist, die gleichmäßig um die Seele (13) herum angeordnet sind, um ein Auslenken des Trägers (11) aus der Neutralstellung in jede Richtung zu ermöglichen.

11. Abbiegeeinrichtung nach einem der vorhergehenden Ansprüche, wobei
- das Stellmittel eine Anzahl von Kippelemente (25) aufweist, wobei jeweils zwei Kippelemente mittels dem Formgedächtniselement um eine Drehachse (25a) relativ zueinander bewegbar sind,
oder
- jeweils zwei Kippelemente (25) mit einem Formgedächtniselement (20) miteinander gekoppelt sind, wobei die Formänderung des Formgedächtniselements (20) das Bewegen der beiden Kippelemente um die Drehachse (25a) und damit das Auslenken des Trägers (11) aus der Neutralstellung bewirkt.

12. Abbiegeeinrichtung nach einem der vorhergehenden Ansprüche, wobei ein Stellmittel ein Stellmittelmodul bildet und wobei mehrere Stellmittelmodule hintereinander entlang der Längsachse (LA) der Abbiegeeinrichtung angeordnet sind, wobei jedes Stellmittelmodul angepasst ist, den Träger (11) um einen vorbestimmten Winkel auszulenken, wobei die Summe der einzelnen Auslenkwinkel den Gesamtauslenkwinkel des Trägers bildet.

13. Inspektions- und/oder Reinigungssystem, insbesondere Kanalinspektions- und/oder Reinigungssystem, aufweisend zumindest eine Abbiegeeinrichtung nach einem der vorhergehenden Ansprüche.

14. Inspektions- und/oder Reinigungssystem nach dem vorhergehenden Anspruch, wobei
- dieses als Schiebesystem ausgebildet ist, und wobei an der Befestigungseinheit (12) ein Schiebeaal angeordnet ist,
oder
- dieses einen Fahrwagen aufweist, an dem die Abbiegeeinrichtung vorzugsweise lösbar angeordnet ist.

## Claims

1. Turning device (10), in particular for an inspection and/or cleaning system, preferably a duct inspection and/or cleaning system, comprising:
- a support (11), in particular for fastening work equipment to the turning device (10),
- a fastening unit (12), in particular for fastening the turning device (10) to a carriage and/or to a sliding unit of the duct inspection and/or cleaning system,
- a restoring means (13) cooperating with the support (11), and
- at least one adjusting means interacting with the support (11) for deflecting the support (11) out of a neutral position counter to a restoring force of the restoring means (13),
wherein
- the adjusting means has at least one shape-memory element (20) which reversibly changes its shape on the basis of at least one influencing variable,
- the shape change of the shape-memory element (20) causes the support (11) to deflect out of the neutral position,
- the restoring means (13) comprises a core (13) which is arranged concentrically with respect to the longitudinal axis (LA) of the turning device (10), wherein the core is connected at one end to the support (11) and at the other end to the fastening unit (12), and
- the core (13) has a passage through which supply lines, in particular power and/or data lines and/or a water hose, can be guided.

2. Turning device according to the preceding claim, wherein the influencing variable is the temperature of the shape-memory element (20) and wherein the temperature required for a predetermined deflection of the support (11) out of the neutral position can be applied to the shape-memory element (20) directly or indirectly, wherein the shape-memory element (20) is coupled to a control device (30) which is adapted to apply the required temperature to the shape-memory element (20), and wherein the control device (30) is preferably adapted to feed electrical current into the shape-memory element (20) in order to heat it.

3. Turning device according to either of the preceding claims, wherein the shape memory element (20) comprises an elongate shape-memory element, in particular a shape-memory wire, which changes, preferably reduces, its length on the basis of the influencing variable.

4. Turning device according to any of the preceding claims, wherein the adjusting means is arranged eccentrically with respect to the restoring means (13) and wherein the adjusting means is connected at one end to the support (11) and at the other end to the fastening unit (12), wherein the shape-memory element (20) of the adjusting means
- is directly or indirectly connected to the support (11), and
- is directly or indirectly connected to the fastening unit (12).

5. Turning device according to claim 4, wherein the adjusting means additionally comprises at least one tension element (21) which
- is directly or indirectly connected at one end to the shape-memory element (20) and
- is directly or indirectly connected at the other end to the support (11) or to the fastening unit (12).

6. Turning device according to any of the preceding claims, wherein the adjusting means is associated with at least one deflection device (23), in particular a deflection roller, which is arranged eccentrically with respect to the restoring means (13).

7. Turning device according to any of the preceding claims, wherein said device comprises at least one guide means (24) which is arranged between the support (11) and the fastening unit (12), is arranged concentrically with respect to the core (13), and is rigidly connected to the core (13), wherein the guide means (24) comprises at least one throughhole (24a) which extends substantially in parallel with the longitudinal axis (LA) of the turning device and through which the shape-memory element (20) and/or the tension element (21) is guided.

8. Turning device according to any of the preceding claims, wherein the core (13) is designed as a bending bar having a passage.

9. Turning device according to any of the preceding claims, wherein said device comprises a protective tube (14) which is connected at one end to the support (11) and at the other end to the fastening unit (12) in an air-tight and/or fluid-tight manner and in which the adjusting means and the restoring means (13) are arranged.

10. Turning device according to any of the preceding claims, wherein said device comprises at least three adjusting means which are arranged uniformly around the core (13) in order to allow a deflection of the support (11) out of the neutral position in each direction.

11. Turning device according to any of the preceding claims, wherein
- the adjusting means has a number of tilting elements (25), wherein in each case two tilting elements are movable relative to one another about an axis of rotation (25a) by means of the shape-memory element,
or
- in each case two tilting elements (25) are coupled to one another by means of a shape-memory element (20), wherein the shape change of the shape-memory element (20) causes the movement of the two tilting elements about the axis of rotation (25a) and thus the deflection of the support (11) out of the neutral position.

12. Turning device according to any of the preceding claims, wherein an adjusting means forms an adjusting means module and wherein a plurality of adjusting means modules are arranged one behind the other along the longitudinal axis (LA) of the turning device, wherein each adjusting means module is adapted to deflect the support (11) by a predetermined angle, wherein the sum of the individual deflection angles forms the overall deflection angle of the support.

13. Inspection and/or cleaning system, in particular a duct inspection and/or cleaning system, comprising at least one turning device according to any of the preceding claims.

14. Inspection and/or cleaning system according to the preceding claim, wherein
- said system is designed as a sliding system, and wherein a sliding cable is arranged on the fastening unit (12),
or
- said system comprises a carriage on which the turning device is preferably detachably arranged.

## Revendications

1. Dispositif de tournement (10), en particulier destiné à un système d'inspection et/ou de nettoyage, de préférence un système d'inspection et/ou de nettoyage de conduits, comprenant :
- un support (11), en particulier pour la fixation de moyens de travail au dispositif de tournement (10),
- une unité de fixation (12), en particulier pour la fixation du dispositif de tournement (10) à un chariot et/ou à une unité coulissante du système d'inspection et/ou de nettoyage de conduits,
- un moyen de repositionnement (13) coopérant avec le support (11), et
- au moins un moyen de positionnement coopérant avec le support (11) pour dévier le support (11) d'une position neutre contre une force de repositionnement du moyen de repositionnement (13),
dans lequel
- le moyen de positionnement comporte au moins un élément à mémoire de forme (20) qui change de forme de manière réversible en fonction d'au moins une grandeur d'influence,
- le changement de forme de l'élément à mémoire de forme (20) amène le support (11) à dévier de la position neutre,
- le moyen de repositionnement (13) comprend une âme (13) qui est disposée de manière concentrique par rapport à l'axe longitudinal (LA) du dispositif de tournement (10), l'âme étant reliée d'un côté au support (11) et de l'autre à l'unité de fixation (12), et
- l'âme (13) comporte un conduit de passage par lequel des lignes d'alimentation, en particulier des lignes électriques et/ou de données et/ou un tuyau d'eau, peuvent passer.

2. Dispositif de tournement selon la revendication précédente, dans lequel la grandeur d'influence est la température de l'élément à mémoire de forme (20), et dans lequel la température requise pour une déviation prédéfinie du support (11) à partir de la position neutre peut être appliquée directement ou indirectement à l'élément à mémoire de forme (20), dans lequel l'élément à mémoire de forme (20) est accouplé à un dispositif de commande et/ou de régulation (30) adapté pour appliquer la température requise à l'élément à mémoire de forme (20), et dans lequel le dispositif de commande et/ou de régulation (30) est de préférence adapté pour alimenter l'élément de mémoire de forme (20) en courant électrique afin de le chauffer ainsi.

3. Dispositif de tournement selon l'une quelconque des revendications précédentes, dans lequel l'élément à mémoire de forme (20) comprend un élément à mémoire de forme allongée, en particulier un fil à mémoire de forme, qui change de longueur en fonction de la grandeur d'influence, de préférence diminue.

4. Dispositif de tournement selon l'une quelconque des revendications précédentes, dans lequel le moyen de positionnement est disposé de manière excentrique par rapport au moyen de repositionnement (13), et dans lequel le moyen de positionnement est relié d'une part au support (11) et d'autre part à l'unité de fixation (12), dans lequel l'élément à mémoire de forme (20) du moyen de positionnement
- est directement ou indirectement relié au support (11), et
- est directement ou indirectement relié à l'unité de fixation (12).

5. Dispositif de tournement selon la revendication 4, dans lequel le moyen de positionnement comprend en outre au moins un élément de traction (21) qui est
- d'une part directement ou indirectement relié à l'élément à mémoire de forme (20) et
- d'autre part directement ou indirectement relié au support (11) ou à l'unité de fixation (12).

6. Dispositif de tournement selon l'une des revendications précédentes, dans lequel au moins un dispositif de déviation (23), en particulier un rouleau de déviation est associé au moyen de positionnement, lequel dispositif de déviation est disposé de manière excentrique par rapport au moyen de repositionnement (13).

7. Dispositif de tournement selon l'une quelconque des revendications précédentes, le dispositif de tournement comportant au moins un moyen de guidage (24) disposé entre le support (11) et l'unité de fixation (12) et de manière concentrique par rapport à l'âme (13) et relié de manière rigide à l'âme (13), le moyen de guidage (24) comportant au moins un trou débouchant (24a) qui s'étend de manière sensiblement parallèle à l'axe longitudinal (LA) du dispositif de tournement, par lequel trou débouchant l'élément à mémoire de forme (20) et/ou l'élément de traction (21) passent.

8. Dispositif de tournement selon l'une quelconque des revendications précédentes, dans lequel l'âme (13) est réalisée sous la forme d'une barre de flexion dotée d'un conduit de passage.

9. Dispositif de tournement selon l'une quelconque des revendications précédentes, le dispositif de tournement comportant un tuyau de protection (14) qui est relié de manière étanche à l'air et/ou aux fluides d'une part au support (11) et d'autre part à l'unité de fixation (12) et dans lequel le moyen de positionnement et le moyen de repositionnement (13) sont disposés.

10. Dispositif de tournement selon l'une quelconque des revendications précédentes, le dispositif de tournement comportant au moins trois moyens de positionnement disposés uniformément autour de l'âme (13) afin de permettre une déviation du support (11) à partir de la position neutre dans chaque sens.

11. Dispositif de tournement selon l'une quelconque des revendications précédentes, dans lequel
- le moyen de positionnement comporte un certain nombre de biellettes (25), dans lequel deux biellettes respectives sont mobiles l'une par rapport à l'autre autour d'un axe de rotation (25a) au moyen de l'élément à mémoire de forme,
ou
- deux biellettes (25) dotées d'un élément à mémoire de forme (20) sont accouplées ensemble, dans lequel le changement de forme de l'élément à mémoire de forme (20) entraîne le déplacement des deux biellettes autour de l'axe de rotation (25a) et conjointement la déviation du support (11) à partir de la position neutre.

12. Dispositif de tournement selon l'une quelconque des revendications précédentes, dans lequel un moyen de positionnement forme un module de moyen de positionnement, et dans lequel plusieurs modules de moyen de positionnement sont disposés l'un derrière l'autre suivant l'axe longitudinal (LA) du dispositif de tournement, dans lequel chaque module de moyen de positionnement est adapté pour dévier le support (11) d'un angle prédéfini, dans lequel la somme des différents angles de déviation forme l'angle de déviation total du support.

13. Système d'inspection et/ou de nettoyage, en particulier système d'inspection et/ou de nettoyage de conduits, comportant au moins un dispositif de tournement selon l'une quelconque des revendications précédentes.

14. Système d'inspection et/ou de nettoyage selon la revendication précédente,
- le système d'inspection et/ou de nettoyage étant réalisé sous la forme d'un système coulissant, et dans lequel une tige coulissante est disposée au niveau de l'unité de fixation (12),
ou
- le système d'inspection et/ou de nettoyage comportant un chariot sur lequel le dispositif de tournement est disposé de préférence de manière amovible.
